# EUROPEAN PATENT SPECIFICATION

(11) **EP 1 849 530 B1**
(45) Date of publication and mention of the grant of the patent: **01.08.2012**
(21) Application number: 06008749.1
(22) Date of filing: 27.04.2006
(51) Int. Cl.: B05D 7/02

(54) **Method for providing a profile member with a coating**
Verfahren zur Herstellung einer Beschichtung auf einem Profilkörper
Méthode de réalisation d'un revêtement sur un élément profilé

(43) Date of publication of application: 31.10.2007
(73) Proprietor: Deceuninck NV, 8830 Hooglede-Gits (BE)
(72) Inventor: Grymonprez, Wim Maurits Ivo, 8800 Roeselare (BE)
(74) Representative: BiiP cvba

(56) References cited:
- EP-A- 0 841 158
- EP-A1- 0 763 387
- DE-A1- 4 210 528
- DE-A1- 4 343 468
- US-A- 6 120 886

## Description

The invention relates to a method for providing a profile member with a coating, at least over a first part of its surface with width W, the coating comprising a thermosetting resin and a polymeric powder dispersed in said resin. The field of the invention is particularly related to profile members used in the construction of windows, doors, gates or other constructional elements which are composed of a plurality of profile members, and more particular in profile members made of plastic. The plastic used can be either a thermosetting plastic or a thermoplastic. The profile members are preferably substantially made of PVC. The polymeric powder is dispersed in the resin to give the coating a grained structure, thus avoiding a glossy appearance.

A profile member can be provided with a coating e.g by spray coating or by the application of a foil provided with a coating. Spray coating has the advantage that a relatively thick coating layer of e.g. a thermosetting resin can be applied such that this layer can comprise a polymeric powder to obtain the desired grained surface structure.

DE 4 210 528 A1 discloses a method for providing a profile member with a coating, wherein the coating is applied to a foil and the foil is attached to the profile member.

However, when coating is applied to an object in the form of a spray, a significant fraction of the coating directed at the object may not be deposited on the object, but is wasted in the form of an overspray. Even in an automised spraying process the amount of overspray is at least 40 wt % of the total amount of the coating used. In even more inefficient circumstances, the coating and the object can acquire a static charge of the same polarity resulting in the coating being partially repelled from the object, and thus in an even larger amount of overspray.

In coating applications requiring a high quality coating finish it is generally desirable to completely and evenly coat an object to be coated with a minimum expenditure of coating. This is desirable for several reasons. First, coatings for the above mentioned profile members are often expensive. Therefore, reducing coating consumption offers the immediate benefit of reduced coating cost. Second, coating material which is not deposited upon the object to be coated can be lost to the environment and this loss generally is an environmentally undesirable form of waste. Therefore, reducing the quantity of coating lost to the environment in a coating process reduces the costs of disposing of the lost coating material and reduces emissions of coating solvents.

Another disadvantage of providing a coating by a spray coating method on a profile member is that those surfaces of the profile member which are not to be coloured have to be masked first. Then those surfaces which are to be coloured, are degreased to obtain good adhesion of the coating. Then the coating is applied by means of a spray unit in two or three successive layers, to the profile member, finally followed by air-drying of the coating or drying of the construction in a heated oven. Masking, to prevent overspray on profile surfaces, which are not intended to be painted, degreasing and spraying of the construction are carried out manually. The drawback of this method is that it is very labour-intensive, time-consuming and creates high amounts of waste due to masking tape or other products used to cover non-painted surfaces. This method consequently results in low productivity and is very expensive. Owing to the wide variety of profile members and to their dimensions on the one hand, and to the difficulty of masking different parts of them on the other hand, automation of this method cannot be achieved in an efficient manner.

It is an object of the invention to provide a method that permits efficient transfer of coating to at least a first part of the surface of a profile member.

This object is achieved in that
a) the coating is applied to a foil with a width of at least 2 x W;
b) the foil is cut in at least two strips with a width W;
c) the strips are attached to the first part of the surface of the profile member.

With the features of claim 1 the overspray is reduced with at least a factor 2, which results in a significant reduction of the necessary amount of coating material.

In the method of the invention the coating is applied to a foil with a width of at least 2W, after which the foil is cut in at least two strips with a width W. The strips are subsequently attached to the first part of the surface of the profile member. This can be done before or after several profile members are assembled to a constructional element. Applying a foil with a width of at least 2W has the advantage that the relative amount of overspray is decreased with a factor 2. Preferably the coating is applied on a foil with a width of at least 5W, more preferably 10W, thus reducing the relative amount of overspray with a factor 10.

The foil used in the method of the invention can be a soft or a hard PVC foil. Soft PVC comprises a plasticizer, hard PVC does not A disadvantage of the use of a soft PVC foil is that plasticizer may migrate to the surface of the foil, thus deteriorating the adhesion between the foil and the profile member to which the foil is adhered. For this reason preferably a hard PVC foil is used.

The foil generally has a thickness of between 50 and 300 µm, preferably between 100 and 200 µm. A foil between 50 and 300 µm has sufficient strength a avoid tear during handling, but is flexible enough to be folded around a sharp corner. Most preferably the foil is about 150 µm thick.

In the method of the invention the coating preferably has a thickness of between 25 and 50 µm A coating with a thickness of between 25 and 50 µm is sufficient thick to over cover polymeric particles used to avoid a glossy appearance, but can still be folded around a sharp corner (e.g. a 90° angle with a radius of 0,2 mm) without being cracked.

Folding a coated foil around said sharp corner still requires an elongation at break of the coating of at least 40 %. Such a foil can be applied even onto a sharply curved surface without cracks being formed in the coating. Preferably the coating has an elongation at break of at least 80 %. The elongation at break of the coating is measured by applying a 40 µm thick coating on a 150 µm thick PVC film which is subsequently subjected to a tensile test according to ISO 527-3 type 2 specimen at a speed of 5 mm/min, wherein the elongation at break of the coating was observed.

The coating with an elongation at break of at least 40 %, used in the method of the invention can be a water-based resin, or a UV-curable resin. Preferably the coating is based on thermosetting resin and formed by crosslinking of a resin, in which hydroxyl and/or carboxyl groups are present with a hardener. Preferably, the coating is a polyurethane coating in which a thermoplastic resin in the form of a powder, preferably polyamide-11, is dispersed. The term polyurethane coating refers to a coating which contains at least one polymer in which hydroxyl and/or carboxyl groups are present. In addition, a product is present which ensures crosslinking of these polymers. For the polymer it is generally possible to use polyacrylates, epoxy resins, polyether, polyester, a caprolactam or a polyvinyl-based polymer.

The product which ensures crosslinking, also known as the hardener, is preferably composed of aromatic isocyanate. Alternatively, it may be aliphatic or cycloaliphatic, the use of the diisocyanates and triisocyanates being preferred. In this case, the linked polymer having a hydroxyl and/or carboxyt/isocyanate function is known as polyurethane.

The resin further comprises a polymeric powder. The polymeric powder typically has a particle size of between 30 and 70 µm to obtain the desired grained structure of the coating layer. The powders can be obtained by grinding or direct polymerization to give the desired granulometric size.

Suitable polymers for the powders are polyamides, polyether amides and polyether ester amides. The polymeric powder preferably has a softening point between 110 and 230 °C.

Preferably the polymeric powder is a polyamide. Examples of suitable .polyamides are polyamide PA-6.6., polyamide PA-6.10. and polyamide PA-6.12. Mixtures are possible. Usually this involves PA-11, PA-12, PA-6.12 and/or PA-12.12, as such, or as mixtures; preferably polyamides having from 10 to 13 carbon atoms per carbon amide group are used.

The ultimate appearance of the coating can either be a relatively smooth structure or a grained structure and any gradations in between, depending on the amount and particle size af the polymeric powder applied:

Methods to apply a colour onto a profile member by means of a flexible foil are known in the art. To avoid fracture of the coating during handling of the foil, generally a printing ink process is applied. This process results in a coating with a thickness of between 2 and 3 µm. This low thickness of the printing ink layer prevents the layer from the occurrence of cracks during handling. Therefore this process is not suitable for the application of a coating that comprises a polymeric powder with a particle size up to 70 µm.

In another known process an as such flexible base foil is mass pigmented with a colorant. This also does not lead to the desired grained structure of the coating as can be obtained with the method of the invention. To protect the state of the art foils against sunlight and solvents a coloured or printed base foil is often combined with a protective polymethylmathacrymate (PMMA), polyvinylidenefluoride (PVDF) or polyinylfluoride (PVF) cover foil resulting in a composite foil, which, however gives the surface a glossy appearance. Although this glossy appearance is often suppressed by embossing technology this is generally insufficient to obtain a mat surface. Also silicates are added to the cover foil to obtain a mat surface. Addition of silicates however is only a temporarily solution as silicates have to be at the surface of the cover foil to be effective and wear out after a period of time. This wear-out is going even more rapidly if the profiles are polished when cleaning. Another advantage of the method of the present invention therefore is that it leads to a surface with a lower degree of gloss with respect to surfaces covered with a composite foil as described in the state of the art.

In a preferred embodiment the foil itself may be coloured in a similar colour as applied in the foil. This has the advantage that a damage of the coating or a local removal is hardly visible.

The invention further relates to a profile member, preferably a window profile, covered over at least a first part of its surface with a foil comprising a coating wherein the coating comprises a thermosetting resin and a polymeric powder dispersed in said resin and the coating has an elongation at break of at least 40% and to a construction, preferably a window comprising assembled profile members according to the invention.

The invention will be elucidated with the following non-limiting example.

### Example 1

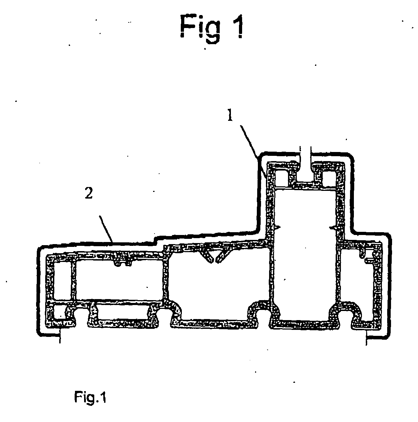

A hard PVC foil consisting of the components as mentioned in Table 1, with a thickness of 150 µm and a width of 450 mm was spray coated with a two component polyurethane resin comprising a RAL 9006 pigment and 10 wt% PA 11 particles (Rilsan^{R} , Atofina) with a diameter of between 30 and 60 µm. The foil was subsequently cut in 5 strokes with a width of 90 mm each. Each stroke (2) was provided with a 2K polyurethane adhesive and adhered at 55°C to a window profile (1) according to figure 1 around a number of external and internal corners with an angle of 90° and a radius of 0.2 mm. The overspray on a foil with a width of 450 mm with a spray gun, having a beam radius of 45 mm was only 10%.

**Table 1**

| Component | Amount (phr) |
|---|---|
| PVC-R K-value 57 | 100 |
| Ca/Mg/Alu/Zn | 3.5 |
| Stabi-lubricant | 10 |
| Acrylic-impact modifier | 1.5 |
| Epoxidized soya bean oil | 1.3 |
| Triglycerol ester of hydroxyl saturated fatty acid | 0.8 |

### Comparative example A

The window profile of figure 1 was masked on that part of its bottom surface that was not intended to be painted with a masking tape and subsequently spray coated with the same coating and spray gun as used in Example 1. After drying the masking tape was removed and thrown away as waste together with an overspray of 60%

## Claims

1. Method for providing a profile member with a coating, by spray coating at least over a first part of its surface with a width W, the coating comprising a thermosetting resin and a polymeric powder dispersed in said resin, **characterized in that**
a) the coating is applied to a foil with a width of at least 2 x W;
b) the foil is cut in at least two parts with a width W;
c) the parts are attached to the first part of the surfaces of the profile members.

2. Method according to claim 1, wherein the coating is based on thermosetting resin and formed by crosslinking of a resin, in which hydroxyl and/or carboxyl groups are present with a hardener, which coating has an elongation at break of at least 40 %.

3. Method according to claim 1 or claim 2, wherein the thermosetting resin contains hydroxyl and/or carboxyl groups, and a hardener comprising an aromatic, aliphatic or cycloaliphatic diisocyanate or triisocyanates.

4. Method according to any of the claims 1 to 3, wherein the polymeric powder is a thermoplastic polyamide.

5. Method according to any of the claims 1 to 4, wherein the foil is a hard PVC foil

6. Method according to any of the claims 1 to 5, wherein the foil is coloured in a colour similar to the color of the coating.

## Patentansprüche

1. Verfahren zur Bereitstellung einer Beschichtung auf einem Profilelement durch Sprühbeschichtung mindestens über einem ersten Teil seiner Oberfläche mit einer Breite W, wobei die Beschichtung ein wärmehärtbares Harz und ein Polymerpulver umfasst, das im dem Harz dispergiert ist, **dadurch gekennzeichnet, dass**
a) die Beschichtung auf eine Folie mit einer Breite von mindestens 2 x W aufgetragen ist;
b) die Folie in mindestens zwei Teile mit einer Breite W geschnitten ist;
c) die Teile an den ersten Teil der Oberflächen der Profilelemente befestigt sind.

2. Verfahren nach Anspruch 1, wobei die Beschichtung auf wärmehärtbarem Harz basiert und durch Vernetzung eines Harzes gebildet ist, in dem Hydroxyl- und/oder Carboxylgruppen mit einem Härtungsmittel vorhanden sind, wobei die Beschichtung eine Verlängerung nach dem Bruch von mindestens 40 % aufweist.

3. Verfahren nach Anspruch 1 oder Anspruch 2, wobei das wärmehärtbare Harz Hydroxyl- und/oder Carboxylgruppen enthält, und ein Härtungsmittel, umfassend ein aromatisches, aliphatisches oder cycloaliphatisches Diisocyanat oder Triisocyanate.

4. Verfahren nach einem der Ansprüche 1 bis 3, wobei das Polymerpulver ein thermoplastisches Polyamid ist.

5. Verfahren nach einem der Ansprüche 1 bis 4, wobei die Folie eine harte PVC-Folie ist.

6. Verfahren nach einem der Ansprüche 1 bis 5, wobei die Folie mit einer Farbe gefärbt ist, die ähnlich der Farbe der Beschichtung ist.

## Revendications

1. Procédé pour obtenir un élément profilé ayant un revêtement, par revêtement par pulvérisation d'au moins une première partie de la surface sur une largeur W, le revêtement comprenant une résine thermodurcissable et une poudre polymère dispersée dans ladite résine, **caractérisé en ce que**
a) le revêtement est appliqué à une feuille sur une largeur d'au moins 2 x W ;
b) la feuille est découpée en au moins deux parties sur une largeur W ;
c) les parties sont attachées à la première partie des surfaces des éléments profilés.

2. Procédé selon la revendication 1, dans lequel le revêtement est constitué d'une résine thermodurcissable et formé par réticulation d'une résine, dans lequel des groupes hydroxyles et/ou carboxyles sont présents avec un durcisseur, ledit revêtement présente un allongement à la rupture d'au moins 40 %.

3. Procédé selon la revendication 1 ou selon la revendication 2, dans lequel la résine thermodurcissable contient des groupes hydroxyles et/ou carboxyles, et un durcisseur comprenant un diisocyanate ou un triisocyanate aromatique, aliphatique ou cycloaliphatique.

4. Procédé selon l'une quelconque des revendications 1 à 3, dans lequel la poudre polymère est un polyamide thermoplastique.

5. Procédé selon l'une quelconque des revendications 1 à 4, dans lequel la feuille est une feuille de PVC dur.

6. Procédé selon l'une quelconque des revendications 1 à 5, dans lequel la feuille est colorée en une couleur similaire à la couleur du revêtement.
